# EUROPEAN PATENT APPLICATION

(11) **EP 4 818 912 A1**
(43) Date of publication of application: **07.10.2026**
(21) Application number: 25706616.7
(22) Date of filing: 11.02.2025
(51) Int. Cl.: G06F 13/16

(54) **MEMORY SYSTEM, AND OPERATION METHOD AND SYSTEM THEREFOR**

(71) Applicant: Yangtze Memory Technologies Co., Ltd., Wuhan, Hubei 430000 (CN)
(72) Inventor: RU, Feng, 430000 Wuhan, Hubei (CN)
(74) Representative: Lippert Stachow Patentanwälte Rechtsanwälte
(86) International application number: PCT/CN2025/076870
(87) International publication number: WO 2026/170340

(57) **Abstract**

Examples of the present disclosure provide a memory system and an operating method thereof, and a system. The memory system comprises a memory device and a memory controller coupled to the memory device, wherein the memory controller comprises a PCIe interface, and the memory controller is further configured to: generate a first data packet message encapsulated in a PCIe protocol format, wherein a data packet of the first data packet message is encapsulated with at least a portion of a first data unit, and the first data unit is generated in another protocol format different from the PCIe protocol format; and send the first data packet message through the PCIe interface.

## Description

### FIELD

The present disclosure relates to, but is not limited to, a memory system and an operating method thereof, and a system.

### BACKGROUND

A device having a Peripheral Component Interconnect Express (PCIe) interface, such as a PCIe solid-state drive (SSD), may be connected to a host through a PCIe interface and a PCIe bus, and interact with the host via the PCIe bus. The PCIe bus supports multiple topology structures, so that multiple devices can be flexibly connected to the host through the PCIe bus. However, the host needs to perform unified management on the multiple devices, which may occupy a large amount of resources.

### SUMMARY

According to a first aspect, some examples of the present disclosure provide a memory system, comprising a memory device and a memory controller coupled to the memory device, wherein the memory controller comprises a PCIe interface, and the memory controller is further configured to:
generate a first data packet message encapsulated in a PCIe protocol format, wherein a data packet of the first data packet message is encapsulated with at least a portion of a first data unit, and the first data unit is generated in another protocol format different from the PCIe protocol format; and
send the first data packet message through the PCIe interface.

In an example, the memory controller is further configured to:
generate a first message header and a first payload to generate a data packet of the first data packet message, wherein the first payload is located after the first message header, and the first payload is encapsulated with at least a portion of the first data unit.

In an example, the first message header comprises a first field, and the memory controller is further configured to:
configure a value of the first field to indicate that the first data packet message is to be sent in an identifier-based routing manner.

In an example, the first message header further comprises a second field and a third field, and the memory controller is further configured to:
configure a value of the second field to indicate an identifier of the memory system; and
configure a value of the third field to indicate an identifier of a peer device receiving the first data packet message.

In an example, the first message header further comprises a fourth field, the fourth field is located after the third field, and the memory controller is further configured to:
configure a value of the fourth field to indicate that the first data packet message is encapsulated in the PCIe protocol format, and the data packet of the first data packet message is encapsulated with at least a portion of the first data unit.

In an example, the first message header further comprises a fifth field and a sixth field, the fifth field and the sixth field are both located after the fourth field, and the memory controller is further configured to:
configure a value of the fifth field to indicate a port number of the memory system; and
configure a value of the sixth field to indicate a port number of the peer device.

In an example, the data packet of the first data packet message comprises a plurality of double words, the first message header comprises a seventh field and an eighth field, and the memory controller is further configured to:
configure a value of the seventh field to indicate the number of the double words comprised in the first payload; and
configure a value of the eighth field to indicate a length of valid information in the last double word in the first payload.

In an example, the memory controller is further configured to:
generate the first data unit in the another protocol format, wherein the first data unit comprises a first portion and a second portion, and the first payload is encapsulated with at least one of the first portion or the second portion of the first data unit.

In an example, the first data unit comprises a first portion and a second portion, the first payload is encapsulated with the first portion of the first data unit, and the memory controller is further configured to:
generate a second data packet message encapsulated in the PCIe protocol format, wherein a data packet of the second data packet message comprises a second message header and a second payload, and the second payload is encapsulated with the second portion of the first data unit.

In an example, the second payload is encapsulated with a second data unit, the second data unit is generated in the another protocol format, and the second portion of the first data unit is located between the second message header and the second data unit.

In an example, the first portion of the first data unit comprises at least header information, command information, a check code of the header information, and first data information of the first data unit, and the second portion of the first data unit comprises second data information of the first data unit, and a check code of data information composed of the first data information and the second data information.

In an example, the memory controller is further configured to:
receive and parse a third data packet message encapsulated in the PCIe protocol format, wherein a data packet of the third data packet message is encapsulated with at least a portion of a third data unit, and the third data unit is generated in the another protocol format.

In an example, the data packet of the third data packet message is encapsulated with command information of the third data unit, and the memory controller is further configured to:
perform a corresponding operation on the memory device based on the command information.

In an example, the memory controller further comprises a memory interface, and the memory controller is coupled to the memory device through the memory interface.

In an example, the another protocol format comprises a format of a protocol data unit defined by Non-Volatile Memory Express over Transmission Control Protocol.

In an example, the memory system comprises a solid-state drive having the PCIe interface.

According to a second aspect, some examples of the present disclosure provide a system, comprising at least one memory system according to any one of the above examples and at least one peer device comprising another PCIe interface,
wherein the memory system is coupled to the peer device through a PCIe bus, and the memory system sends the first data packet message to the peer device via a PCIe channel in the PCIe bus through the PCIe interface.

According to a third aspect, some examples of the present disclosure provide an operating method of a memory system, comprising:
generating a first data packet message encapsulated in a PCIe protocol format, wherein a data packet of the first data packet message is encapsulated with at least a portion of a first data unit, and the first data unit is generated in another protocol format different from the PCIe protocol format; and
sending the first data packet message through a PCIe interface.

In an example, generating the first data packet message encapsulated in the PCIe protocol format comprises:
generating a first message header and a first payload to generate a data packet of the first data packet message, wherein the first payload is located after the first message header, and the first payload is encapsulated with at least a portion of the first data unit.

In an example, generating the first data packet message encapsulated in the PCIe protocol format further comprises:
configuring a value of a first field in the first message header to indicate that the first data packet message is to be sent in an identifier-based routing manner.

In an example, generating the first data packet message encapsulated in the PCIe protocol format further comprises:
configuring a value of a second field in the first message header to indicate an identifier of the memory system; and
configuring a value of a third field in the first message header to indicate an identifier of a peer device receiving the first data packet message.

In an example, generating the first data packet message encapsulated in the PCIe protocol format further comprises:
configuring a value of a fourth field in the first message header to indicate that the first data packet message is encapsulated in the PCIe protocol format, and the data packet of the first data packet message is encapsulated with at least a portion of the first data unit, wherein the fourth field is located after the third field.

In an example, generating the first data packet message encapsulated in the PCIe protocol format further comprises:
configuring a value of a fifth field in the first message header to indicate a port number of the memory system; and
configuring a value of a sixth field in the first message header to indicate a port number of the peer device, wherein the fifth field and the sixth field are both located after the fourth field.

In an example, generating the first data packet message encapsulated in the PCIe protocol format further comprises:
configuring a value of a seventh field in the first message header to indicate the number of double words comprised in the first payload; and
configuring a value of an eighth field in the first message header to indicate a length of valid information in the last double word in the first payload.

In an example, the first data unit comprises a first portion and a second portion, and the first payload is encapsulated with at least one of the first portion or the second portion of the first data unit.

In an example, the operating method of the memory system further comprises:
generating a second data packet message encapsulated in the PCIe protocol format, wherein a data packet of the second data packet message comprises a second message header and a second payload, the first data unit comprises a first portion and a second portion, the first payload is encapsulated with the first portion of the first data unit, and the second payload is encapsulated with the second portion of the first data unit.

In an example, the second payload is encapsulated with a second data unit, the second data unit is generated in the another protocol format, and the second portion of the first data unit is located between the second message header and the second data unit.

In an example, the operating method of the memory system further comprises:
receiving and parsing a third data packet message encapsulated in the PCIe protocol format, wherein a data packet of the third data packet message is encapsulated with at least a portion of a third data unit, and the third data unit is generated in the another protocol format.

### BRIEF DESCRIPTION OF THE DRAWINGS

FIG. 1 is a schematic diagram of an electronic device comprising a memory system according to some examples of the present disclosure;
FIG. 2 is a schematic diagram of a solid-state drive according to some examples of the present disclosure;
FIG. 3 is a first schematic diagram of a memory device according to some examples of the present disclosure;
FIG. 4 is a second schematic diagram of a memory device according to some examples of the present disclosure;
FIG. 5 is a schematic diagram of a memory system according to some examples of the present disclosure;
FIG. 6 is a schematic diagram of a PCIe system according to some examples of the present disclosure;
FIG. 7 is a schematic diagram of a protocol stack supported by a memory controller in a memory system according to some examples of the present disclosure;
FIG. 8 is a schematic diagram of a memory system sending a first data packet message to a peer device according to some examples of the present disclosure;
FIG. 9 is a schematic diagram of a data packet of a first data packet message according to some examples of the present disclosure;
FIG. 10 is another schematic diagram of a data packet of a first data packet message according to some examples of the present disclosure;
FIG. 11 is a schematic diagram of a data packet of a second data packet message according to some examples of the present disclosure;
FIG. 12 is a first schematic diagram of an encapsulation manner according to some examples of the present disclosure;
FIG. 13 is a second schematic diagram of an encapsulation manner according to some examples of the present disclosure;
FIG. 14 is a third schematic diagram of an encapsulation manner according to some examples of the present disclosure;
FIG. 15 is a schematic diagram of a system according to some examples of the present disclosure; and
FIG. 16 is a schematic flowchart of an operating method of a memory system according to some examples of the present disclosure.

### DETAILED DESCRIPTION

Examples of the present disclosure will be described in more detail below with reference to the accompanying drawings. Although examples of the present disclosure are illustrated in the accompanying drawings, it should be understood that the present disclosure may be implemented in various forms and should not be limited to the examples set forth herein. Rather, these examples are provided so that the present disclosure can be more thoroughly understood and the scope disclosed in the present disclosure can be fully conveyed to those skilled in the art.

In the following description, numerous details are given in order to provide a more thorough understanding of the present disclosure. However, it will be apparent to one skilled in the art that the present disclosure may be practiced without one or more of these details. In other examples, in order to avoid confusion with the present disclosure, some technical features known in the art are not described, that is, not all features of the actual examples are described here, and well-known functions and structures are not described in detail.

In addition, the accompanying drawings are merely schematic illustrations of the present disclosure and are not necessarily drawn to scale. Like reference numerals in the accompanying drawings refer to the same or similar parts, and repeated description thereof will be omitted. Some of the block diagrams shown in the accompanying drawings are functional entities and do not necessarily have to correspond to physically or logically separate entities. These functional entities may be implemented in form of software, or implemented in one or more hardware modules or integrated circuits, or implemented in different networks and/or processor devices and/or microcontroller devices.

The flowcharts shown in the accompanying drawings are merely illustrational and do not necessarily comprise all steps. For example, some steps may be further decomposed, and some steps may be combined or partially combined, so the actual sequence of execution may be changed according to actual conditions.

Terms used herein are for the sole purpose of describing particular examples and should not to be considered as limitations of the present disclosure. As used herein, "a", "an" and "said/the" in the singular form are intended to comprise the plural forms as well, unless indicated clearly otherwise in the context. It should also be understood that the terms including at least one of "consists of" or "comprising", when used in this description, are to identify the presence of at least one of stated features, integers, steps, operations, elements or components, but do not exclude the presence of at least one of one or more other features, integers, steps, operations, elements, components or groups. As used herein, the term "at least one of" comprises any and all combinations of the related listed items.

A memory device in the examples of the present disclosure comprises, but is not limited to, a three-dimensional NAND type memory, and for ease of understanding, the three-dimensional NAND type memory is taken as an example to illustrate.

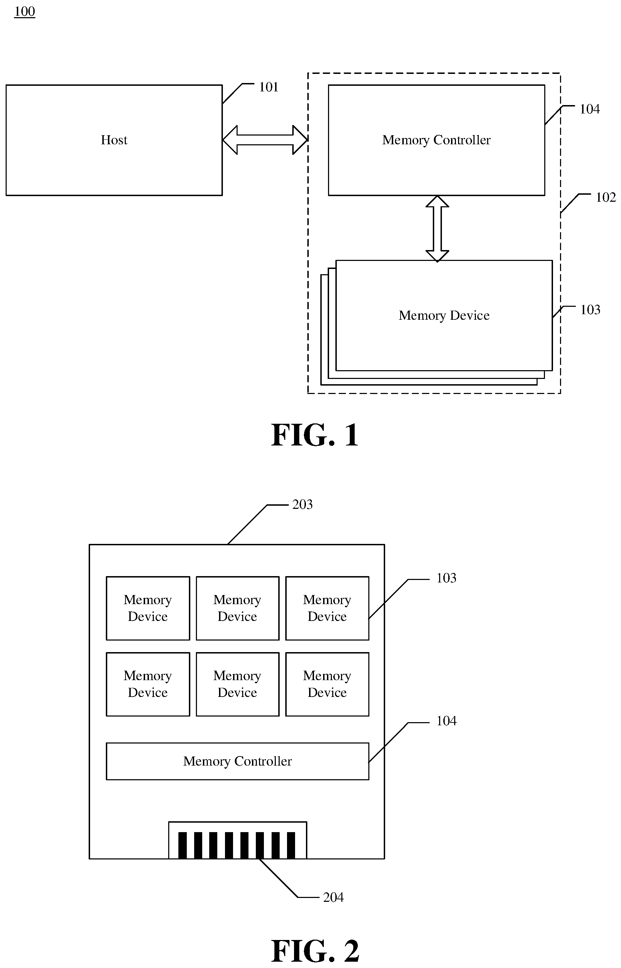

FIG. 1 is a schematic diagram of an electronic device having a memory system according to some examples of the present disclosure. In some examples of the present disclosure, the electronic device 100 may be a mobile phone, a desktop computer, a laptop computer, a tablet computer, a vehicle computer, a game console, a printer, a positioning device, a wearable electronic device, a smart sensor, a virtual reality (VR) device, an augmented reality (AR) device, or any other suitable electronic device having a memory therein. As shown in FIG. 1, the electronic device 100 may comprise a host 101 and a memory system 102, which may comprise one or more memory devices 103 and a memory controller 104. The host 101 may comprise a processor of the electronic device, for example, a central processing unit (CPU), or a system on a chip (SoC), for example, an application processor (AP). The host 101 may be configured to send data to the memory system 102 or receive data from the memory system 102.

In some examples, the memory controller 104 is coupled to the memory device 103 and the host 101 and is configured to control the memory device 103. The memory controller 104 may manage data stored in the memory device 103 and communicate with the host 101. In some examples, the memory controller 104 is designed to operate in a high duty cycle environment, such as in a solid-state drive.

In some examples, the memory controller 104 and the one or more memory devices 103 may be integrated into various types of storage devices, that is, the memory system 102 may be implemented and packaged into different types of terminal electronics.

In some examples, referring to FIG. 2, the memory controller 104 and a plurality of memory devices 103 may be integrated into a solid-state drive 203. The solid-state drive 203 may further comprise a solid-state drive connector 204 that couples the solid-state drive 203 to a host (e.g., the host 101 in FIG. 1).

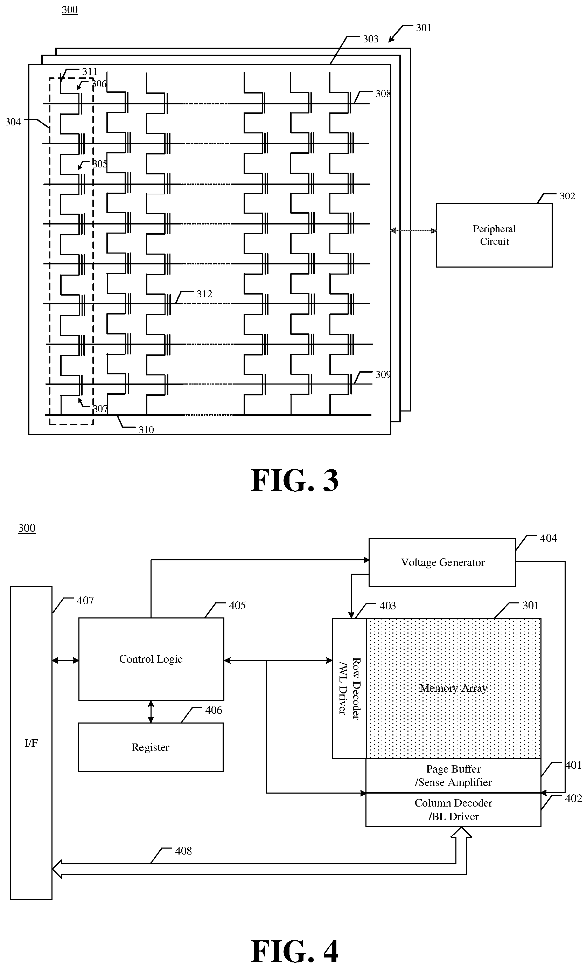

FIG. 3 is a first schematic diagram of a memory device according to some examples of the present disclosure. The memory device 300 may be an example of the memory device 103 in FIG. 1. The memory device 300 may comprise a memory array 301 and a peripheral circuit 302 coupled to the memory array 301. Illustration is made by taking a three-dimensional NAND type memory array as an example of the memory array 301, wherein memory cells 305 are NAND memory cells, the memory cells 305 are provided in the form of an array of memory strings 304, and each memory string 304 extends vertically above a substrate (not shown). In some examples, each memory string 304 comprises a plurality of memory cells 305 coupled in series and stacked vertically. Each memory cell 305 may maintain a continuous analog value, e.g., voltage or charge, which depends on the number of electrons trapped within a region of the memory cell 305. Each memory cell 305 can be either a memory cell of a floating gate type comprising a floating-gate transistor or a memory cell of a charge trap type comprising a charge-trap transistor.

In some examples, each memory cell 305 is a single level cell (SLC) having two possible memory states and thus may store one bit of data. For example, the first memory state "0" may correspond to a first threshold voltage distribution and the second memory state "1" may correspond to a second threshold voltage distribution. In some examples, each memory cell 305 is a multi-level cell capable of storing more than a single bit of data in four or more memory states, e.g., a multi-level cell (MLC) storing two bits per cell, a triple level cell (TLC) storing three bits per cell, or a quad-level cell (QLC) storing four bits per cell.

As shown in FIG. 3, each memory string 304 may comprise a bottom select transistor (BST) 307 at its source terminal and a top select transistor (TST) 306 at its drain terminal. The bottom select transistor 307 and the top select transistor 306 may be configured to activate the selected memory string 304 during read and program operations.

In some examples, the memory array 301 comprises a plurality of memory blocks 303, and the sources of the memory strings 304 in the same memory block 303 may be coupled through a common source line (CSL) 310. In other words, all the memory strings 304 in the same memory block 303 have an array common source (ACS). According to some examples, the top select transistor 306 of each memory string 304 is coupled to a corresponding bit line (BL) 311 from which data can be read or written via an output bus (not shown). In some examples, each memory string 304 is configured to be selected or deselected by at least one of: applying a select voltage (e.g., a voltage higher than a threshold voltage of the top select transistor 306) or a deselect voltage (e.g., 0V) to a top select gate (TSG) of the corresponding top select transistor 306 through one or more top select lines (TSL) 308, or applying a select voltage (e.g., a voltage higher than a threshold voltage of the bottom select transistor 307) or a deselect voltage (e.g., 0V) to a bottom select gate (BSG) of the corresponding bottom select transistor 307 through one or more bottom select lines (BSL) 309.

In some examples, each memory block 303 is a basic data unit for an erase operation, i.e., all memory cells 305 on the same memory block 303 are erased at the same time. To erase memory cells 305 in a selected memory block, a common source line 310 coupled to the selected memory block as well as unselected memory blocks in the same plane as the selected memory block may be biased with an erase voltage. It could be understood that, in some examples, the erase operation may be performed at a half-memory-block level, at a quarter-memory-block level, or at a level of any suitable number of memory blocks or any suitable fraction of a memory block. Memory cells 305 of adjacent memory strings 304 may be coupled by word lines 312 that select which row of memory cells 305 is affected by a read or program operation.

In some examples, the peripheral circuit 302 may comprise any suitable analog, digital, and mixed signal circuit to enable operations on the memory array 301 by applying at least one of voltage signals or current signals to each of target memory cells 305 and sensing at least one of voltage signals or current signals from each of target memory cells 305 through the bit lines 311, the word lines 312, the common source lines 310, the bottom select lines 309, and the top select lines 308. The peripheral circuit 302 may comprise various types of peripheral circuits formed using metal-oxide-semiconductor technology.

FIG. 4 is a second schematic diagram of a memory device according to some examples of the present disclosure. With reference to FIG. 3 and FIG. 4, the peripheral circuit 302 may comprise a page buffer/sense amplifier 401, a column decoder/bit line driver 402, a row decoder/word line driver 403, a voltage generator 404, control logic 405, a register 406, a flash memory interface 407, and a data bus 408. It should be understood that, in some examples, the peripheral circuit may also comprise additional circuits not shown in FIG. 4.

The page buffer/sense amplifier 401 may be configured to read data from the memory array 301 and to program (write) data to the memory array 301 according to control signals from the control logic 405. In one example, the page buffer/sense amplifier 401 may store a page of programmed data (written data) to be programmed into the memory array 301. In another example, the page buffer/sense amplifier 401 may perform a program verification operation to ensure that the data has been properly programmed into the memory cells coupled to the selected word line. In yet another example, the page buffer/sense amplifier 401 may also sense a low power signal from a bit line representing a data bit stored in a memory cell, and amplify a small voltage swing to an identifiable logic level in a read operation. The column decoder/bit line driver 402 may be configured to be controlled by the control logic 405 and to select one or more memory strings by applying a bit line voltage generated from the voltage generator 404.

The row decoder/word line driver 403 may be configured to be controlled by the control logic 405 and to select/deselect a memory block of the memory array 301 and select/deselect a word line of the memory block. The row decoder/word line driver 403 may also be configured to drive a word line using a word line voltage generated from the voltage generator 404. In some examples, the row decoder/word line driver 403 may also select/deselect and drive the bottom select line and the top select line. As described in detail below, the row decoder/word line driver 403 is configured to perform a program operation on memory cells coupled to (one or more) selected word line(s). The voltage generator 404 may be configured to be controlled by the control logic 405 and to generate word line voltages (e.g., reading voltages, programming voltages, passing voltages, local voltages, verifying voltages, etc.), bit line voltages, and source line voltages to be supplied to the memory array 301.

The control logic 405 may be coupled to each peripheral circuit described above and be configured to control operations of each peripheral circuit. The register 406 may be coupled to the control logic 405 and comprise a status register, a command register, and an address register for storing status information, command operation codes (OP codes), and command addresses for controlling operations of each peripheral circuit. The flash memory interface 407 may be coupled to the control logic 405 and act as a control buffer to buffer control commands received from a host (not shown) and relay them to the control logic 405, and to buffer status information received from the control logic 405 and relay it to a memory controller. The flash memory interface 407 may also be coupled to the column decoder/bit line driver 402 via the data bus 408, and act as a data I/O interface and a data buffer to buffer data and send it to the memory array 301, or to receive and buffer data from the memory array 301.

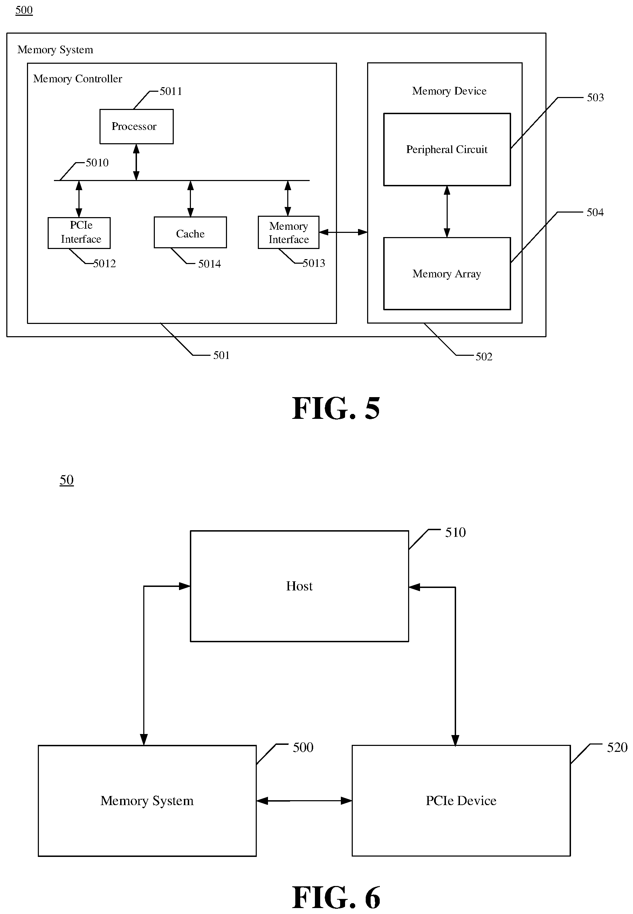

In some examples, FIG. 5 is a schematic diagram of a memory system according to some examples of the present disclosure, where the memory system 500 comprises a memory device 502 and a memory controller 501 coupled to the memory device 502. The memory device 502 comprises a three-dimensional NAND type memory, and in some examples, the memory device 502 comprises a memory array 504 and a peripheral circuit 503 coupled to the memory array 504, and the memory array 504 may be the memory array 301 comprising the NAND memory cells according to the examples discussed above.

In some examples, the memory controller 501 may comprise a processor 5011 and a PCIe interface 5012, a memory interface 5013, and a cache 5014 coupled to the processor 5011 through a bus 5010. The memory controller 501 may be coupled to the memory device 502 through the memory interface 5013, and during the process of data writing, the memory controller 501 may receive the write command, the written data, and the logical address of the written data through the PCIe interface 5012, and may temporarily store the written data in the cache 5014, and it may establish a mapping relationship between logical address to physical address (L2P) for the written data; the memory controller 501 may send the program command to the memory device 502 via the memory interface 5013, and the memory device 502 may receive the program command and receive the written data and the physical address of the written data in response to the program command, and store the written data to the location in the memory array 504 corresponding to the physical address of the written data.

In some examples, the memory system 500 described above may be a solid-state drive having a PCIe interface 5012 and supporting a Non-Volatile Memory Express (NVMe) protocol, which may be connected, via the PCIe bus, to a host 510 through the PCIe interface 5012.

Further, referring to FIG. 6, a PCIe system 50 comprising the memory system 500 may further comprise other PCIe devices 520, where the PCIe device 520 may be, for example, a graphics processing unit (GPU) for processing graphics and computationally intensive tasks, and both the memory system 500 and the PCIe device 520 may be coupled to the host 510 via the PCIe bus. In the PCIe system 50, data can be transferred between the PCIe device 520 and a system memory (for example, the cache 5014 in the memory system 500) by using direct memory access (DMA) technology, so that some resources of the host can be released. However, for a PCIe system of a memory-based transfer model, a unified memory address mapping and memory management mechanism still needs to be established, that is, an operating system (OS) of the host 510 still needs to act as a memory manager to allocate, schedule and reclaim memory resources, which may occupy resources of the operating system and is not conducive to expansion and improvement of system performance.

In this regard, the following examples are provided in the present disclosure.

A memory system is provided in the present disclosure, and referring to FIG. 5, the memory system 500 comprises a memory device 502 and a memory controller 501 coupled to the memory device 502, wherein the memory controller 501 comprises a PCIe interface 5012, and the memory controller 501 is configured to: generate a first data packet message encapsulated in a PCIe protocol format, wherein a data packet of the first data packet message is encapsulated with at least a portion of the first data unit, and the first data unit is generated in another protocol format different from the PCIe protocol format; and send the first data packet message through the PCIe interface 5012.

In some examples, the another protocol format in the examples discussed above comprises a format of a protocol data unit (PDU) defined by Non-Volatile Memory Express over Transmission Control Protocol (NVMe/TCP) protocol.

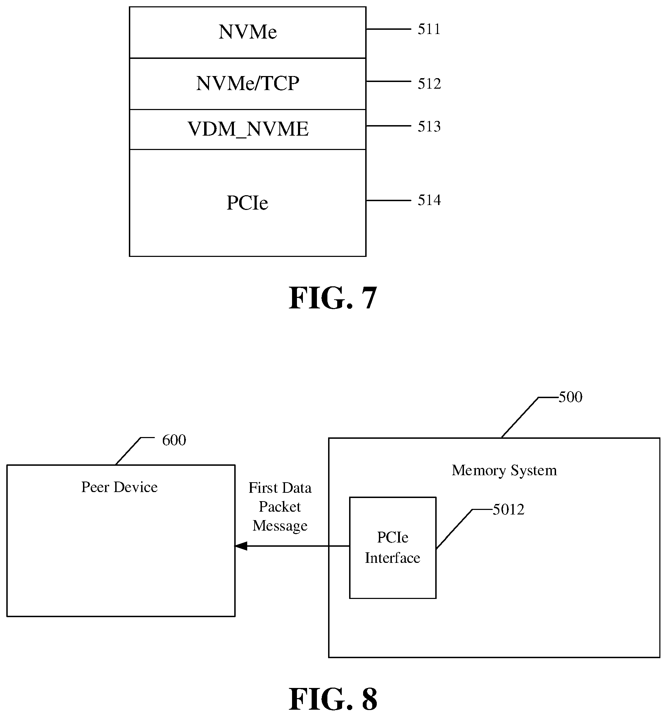

FIG. 7 is a schematic diagram of a protocol stack supported by a memory controller according to some examples of the present disclosure. Referring to FIG. 7, the protocol stack supported by the memory controller 501 may comprise a first layer 511, a second layer 512, a third layer 513, and a fourth layer 514, the functions of which may be implemented by the processor 5011 (e.g., a front-end controller of the processor) and the PCIe interface 5012. The first layer 511 may be an application layer defined by the NVMe protocol, and may generate an NVMe command and data; the second layer 512 may be a transport layer defined by the NVMe/TCP protocol, and may generate a PDU encapsulated with the NVMe command and data, that is, an NVMe/TCP PDU; the third layer 513 may generate a VDM_NVME TLP (transaction layer packet), which may be a data packet that is encapsulated based on a format of a vendor-defined message (VDM) defined by the PCIe protocol and is encapsulated with at least a portion of the NVMe/TCP PDU; and the fourth layer 514 may be a physical layer and a data link layer defined by the PCIe protocol, and may send a message comprising the VDM_NVME TLP. The first data unit in the above examples may be an NVMe/TCP PDU, and the data packet of the first data packet message may be a VDM_NVME TLP.

It should be noted that, in some examples of the present disclosure, the first data packet message may be a message sent to the outside of the memory system through the PCIe interface, the data packet of the first data packet message may be a VDM_NVME TLP, and the first data packet message may further carry other information for link management and control.

Compared with the protocol stack defined by the NVMe/TCP protocol, the protocol stack supported by the memory controller according to the present disclosure may not comprise protocols of the TCP network layer and the underlying layers thereof, but implement the transmission of the NVMe/TCP PDU through the VDM_NVME TLP encapsulated in the PCIe protocol format. In addition, the physical layer and the data link layer defined by the underlying network protocols can also be replaced by the physical layer and the data link layer defined by the PCIe protocol, so that the VDM_NVME TLP encapsulated with the NVMe/TCP PDU can be sent to other PCIe devices via the PCIe bus through the PCIe interface.

In some examples, referring to FIG. 8, the memory system 500 may send the first data packet message to a peer device 600 through the PCIe interface 5012, wherein the peer device 600 may be any PCIe device that receives the first data packet message.

In some examples of the present disclosure, the memory controller in the memory system may generate the first data packet message encapsulated in the PCIe protocol format, and the data packet of the first data packet message is encapsulated with at least a portion of the first data unit, wherein the first data unit is generated in another protocol format different from the PCIe protocol format, and the another protocol format may be a format of a protocol data unit PDU defined by the NVMe/TCP protocol. Thus, the memory system comprising the PCIe interface may support a NVMe-oF (NVMe over Fabrics) protocol, that is, transmission of the NVMe command and data may be implemented through a message-based transport model, so that the NVMe command and data may be directly transferred between the memory system and other PCIe devices, without relying on the operating system of the host to generate the input/output command and perform memory management, thereby reducing occupation of operating system resources and facilitating expansion and improvement of system performance. The data packet of the first data packet message will be described in detail below.

In some examples, the memory controller 501 is further configured to: generate a first message header and a first payload to generate a data packet of the first data packet message, wherein the first payload is located after the first message header, and the first payload is encapsulated with at least a portion of the first data unit.

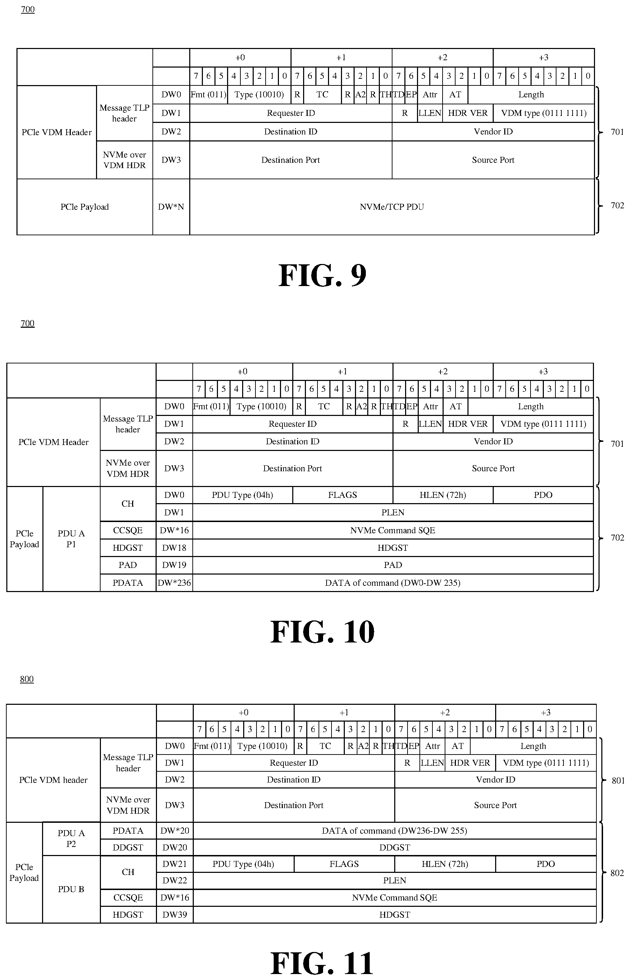

FIG. 9 is a schematic diagram of a data packet of a first data packet message according to some examples of the present disclosure. The data packet 700 of the first data packet message according to some examples of the present disclosure, that is, the VDM_NVME TLP, may be generated based on a format of the VDM Type1 defined by the PCIe protocol. The data packet 700 of the first data packet message comprises a first message header 701, that is, a PCle VDM Header, and a first payload 702, that is, a PCle Payload. The first message header 701 comprises a VDM type field, whose value is configured to be "01111111", indicating that the data packet 700 of the first data packet message belongs to the VDM Type1.

Referring to FIG. 9, the first message header 701 may comprise a message TLP header with a length of three double words (DW) and a custom header (NVMe over VDM HDR) with a length of one double word. The meanings and functions of some fields in the first message header 701 will be described below.

In some examples, referring to FIG. 9, the first message header comprises a Fmt field, whose value may be configured to be "011", indicating that the first message header 701 comprises four double words (that is, DW0, DW1, DW2, and DW3) and the first payload 702 of the data packet 700 of the first data packet message is encapsulated with data. Here, the first payload 702 comprises N double words that are located after DW3, and the data encapsulated in the first payload 702 is at least a portion of the first data unit.

In some examples, the first message header 701 comprises a first field, and the memory controller 501 is further configured to: configure a value of the first field to indicate that the first data packet message is to be sent in an identifier (ID)-based routing manner.

Referring to FIG. 9, the first field in the first message header 701 may be a Type field defined by the PCIe protocol, and configuring the value of the first field to indicate that the first data packet message is to be sent in the identifier-based routing manner may comprise setting the lower three bits of the Type field to "010". Here, the value of the Type field being set to "10010" is taken as an example.

In some examples, the first message header 701 further comprises a second field and a third field, and the memory controller 501 is further configured to: configure a value of the second field to indicate an identifier of the memory system 500; and configure a value of the third field to indicate an identifier of the peer device 600 receiving the first data packet message.

Referring to FIG. 9, the second field in the first message header 701 may be a Requester ID field defined by the PCIe protocol, the third field may be a Destination ID field defined by the PCIe protocol, and a value of the second field and a value of the third field may both be composed of a bus number, a device number, and a function number, for a unique identification of a PCIe device.

In some examples of the present disclosure, the memory controller may send the first data packet message in the identifier-based routing manner, wherein the data packet of the first data packet message may be encapsulated with the identifier of the memory system and the identifier of the peer device receiving the first data packet message. Thus, the first data packet message may be sent to the correct peer device, and the completion packet message generated by the peer device may also be correctly returned to the memory system by the peer device, so that the NVMe command and data may be correctly transferred between the memory system and the peer device, thereby meeting the requirement of the NVMe/TCP protocol on the reliability and the ordering of message interaction.

In some examples, the first message header 701 further comprises a fourth field, the fourth field is located after the third field, and the memory controller 501 is further configured to: configure a value of the fourth field to indicate that the first data packet message is encapsulated in the PCIe protocol format, and the data packet of the first data packet message is encapsulated with at least a portion of the first data unit.

Referring to FIG. 9, the fourth field in the first message header 701 may be a Vendor ID field defined by the PCIe protocol, and the memory controller 501 may configure the value of the Vendor ID field to indicate that the first data packet message is a data packet message that is compatible with the NVMe/PCIe protocol and the NVMe/TCP protocol, for example, indicating that the first data packet message is encapsulated in the PCIe protocol format and that the data packet of the first data packet message is encapsulated with all or at least a portion of the NVMe/TCP PDU.

In some examples, the first message header 701 further comprises a fifth field and a sixth field, the fifth field and the sixth field are both located after the fourth field, and the memory controller 501 is further configured to: configure a value of the fifth field to indicate a port number of the memory system 500; and configure a value of the sixth field to indicate a port number of the peer device 600.

Referring to FIG. 9, the fifth field in the first message header 701 may be a Source Port field defined by the NVMe/TCP protocol, the sixth field may be a Destination Port field defined by the NVMe/TCP protocol, and the fifth field and the sixth field may be located in DW3.

In some examples of the present disclosure, the memory system may be compatible with a multi-port connection of the NVMe/TCP protocol, wherein the PCIe interface may have a plurality of ports, where different ports may be connected to different PCIe devices (that is, different peer devices), and each port may have a port number defined by the TCP protocol. By encapsulating the port number of the memory system and the port number of the peer device in the first message header, the memory system and the peer device may be connected through correct ports, thereby further improving reliability of message interaction.

It should be noted that the sequence of the Destination Port field and the Source Port field in FIG. 9 is merely an example, and the sequence of the Destination Port field and the Source Port field is not limited in the present disclosure.

In some examples, the first message header 701 comprises a seventh field and an eighth field, and the memory controller 501 is further configured to: configure a value of the seventh field to indicate the number of double words comprised in the first payload 702; and configure a value of the eighth field to indicate a length of valid information in the last double word in the first payload 702.

Referring to FIG. 9, the seventh field in the first message header 701 may be a Length field defined by the PCIe protocol, wherein the first data unit or the portion of the first data unit encapsulated in the first payload 702 comprises N double words, then the value of the seventh field is configured to indicate that the length of the first payload 702 is N double words. The eighth field in the first message header 701 is a LLEN field whose value may be configured to indicate the length of valid information in the last double word in the first payload 702. In the first data packet message, the information of the first data unit encapsulated in the first payload 702 may not be able to fill the last double word, and in this case, the remaining bytes of the last double word may be filled with invalid information, and the length of the valid information in the last double word may be 1 byte, 2 bytes, 3 bytes, or 4 bytes, and the corresponding values of the eighth field may be, for example, "00", "01", "10", and "11", respectively.

Here, the position of the LLEN field to be set is merely an example, and in other examples, the LLEN field may also be located in other reserved fields of the first message header 701.

In some examples, referring to FIG. 9, the first message header 701 may further comprise an HDR VER field, which is a non-mandatory field whose value may be configured to indicate a version of the first message header 701.

It should be noted that the first message header 701 may further comprise fields that are not mentioned in the examples discussed above, and definitions and functions of these fields all conform to the PCIe protocol specification, and details are not described herein again.

The above examples describe definitions and functions of the respective fields in the first message header 701. In the following, the manner in which the data unit is encapsulated in a payload of a data packet message will be described by using some examples.

In some examples, the memory controller 501 is further configured to: generate the first data unit in the another protocol format described above, wherein the first data unit comprises a first portion and a second portion, and the first payload is encapsulated with at lest one of the first portion or the second portion.

In some examples, FIG. 10 is still another schematic diagram of a data packet of a first data packet message according to some examples of the present disclosure, and FIG. 11 is a schematic diagram of a data packet of a second data message according to some examples of the present disclosure. Here, the data packet 700 of the first data packet message shown in FIG. 10 still comprises the first message header 701 and the first payload 702, and the structure of the information encapsulated in the first payload 702 is illustrated exemplarily. In some examples, with reference to FIG. 10 and FIG. 11, the first data unit PDU A comprises a first portion P1 and a second portion P2, the first payload 702 is encapsulated with the first portion P1 of the first data unit PDU A, and the memory controller 501 is further configured to: generate a second data packet message encapsulated in the PCIe protocol format, wherein a data packet 800 of the second data packet message comprises a second message header 801 and a second payload 802, and the second payload 802 is encapsulated with the second portion P2 of the first data unit PDU A.

In some examples of the present disclosure, when a size of the first data unit PDU A exceeds the maximum capacity of the first payload 702, the first data unit PDU A may be partitioned into the first portion P1 and the second portion P2, wherein the first portion P1 of the first data unit PDU A may be encapsulated in the first payload 702 of the data packet 700 of the first data packet message, while the second portion P2 of the first data unit PDU A may be encapsulated in the second payload 802 of the data packet 800 of the second data packet message.

With reference to FIG. 10 and FIG. 11, the first portion P1 of the first data unit PDU A comprises at least header information CH, command information CCSQE, a check code HDGST of the header information, and first data information of the first data unit, and the second portion P2 of the first data unit PDU A comprises second data information of the first data unit and a check code DDGST of data information composed of the first data information and the second data information. Here, taking the first data information being encapsulated in 236 DWs after DW19 in the first payload 702 and the second data information being encapsulated in the first 20 DWs in the second payload 802 as an example, the value of the Length field in the first message header 701 is configured to indicate that the length of the first payload 702 is 256 double words, and the value of the Length field in the second message header 801 is configured to indicate that the length of the second payload 802 is 40 double words.

It should be noted that the header information CH may comprise a PDU Type field, a FLAGS field, an HLEN field, a PDO field, and a PLEN field. A value of the PDU Type field is configured to indicate a type of the PDU, for example, an initialization connection request (ICReq), a data transmission (H2C Data), and the like; a value of the FLAGS field is configured to indicate an attribute of the PDU, for example, whether the PDU comprises the HDGST and the DDGST; a value of the HLEN field is configured to indicate a length of the header information CH of the PDU; and a value of the PDO field is configured to indicate a start position of the data information in the PDU. In addition, the command information CCSQE comprises an NVMe Command SQE, the check code HDGST of the header information is configured to verify the integrity of the header information CH, and the check code DDGST of the data information is configured to verify the integrity of the data information. The ordering and functions of these fields all conform to the NVMe/TCP protocol specification, and details are not described herein again.

In some other examples, when the size of the first data unit does not exceed the maximum capacity of the first payload 702, the first payload 702 may be encapsulated with the first portion and the second portion of the first data unit.

Referring to FIG. 11, the second payload 802 may further be encapsulated with a second data unit PDU B, the second data unit PDU B is generated in the another protocol format, and the second portion P2 of the first data unit PDU A is located between the second message header 801 and the second data unit PDU B. Herein, the another protocol format is the format of a PDU defined by the NVMe/TCP protocol, and the second data unit PDU B may not comprise data information and only comprise command information corresponding to the PDU B.

It may be understood that, in the examples discussed above, if both the first data packet message and the second data packet message are sent to the same peer device, all fields in the first message header 701 and the second message header 801, except the Length field and the LLEN field, shall be configured to be in the same state. In addition, since both the first message header 701 and the second message header 801 comprise the identifier and the port number of the memory system and the identifier and the port number of the peer device, both the first data packet message and the second data packet message may be sent to the correct peer device, so that the first data unit which is partitioned into the first portion and the second portion is sent to the correct peer device.

In some examples of the present disclosure, the peer device receiving the message comprising the VDM_NVME TLP sent by the memory system 500 may further parse the VDM_NVME TLP to obtain the information of the NVMe/TCP PDU encapsulated in the VDM_NVME TLP, and perform a corresponding operation based on the parsed information. For example, for the peer device receiving the first data packet message and the second data packet message sent by the memory system 500, the peer device may further parse the data packet 700 of the first data packet message and the data packet 800 of the second data packet message, to obtain the information in the first data unit PDU A and the second data unit PDU B.

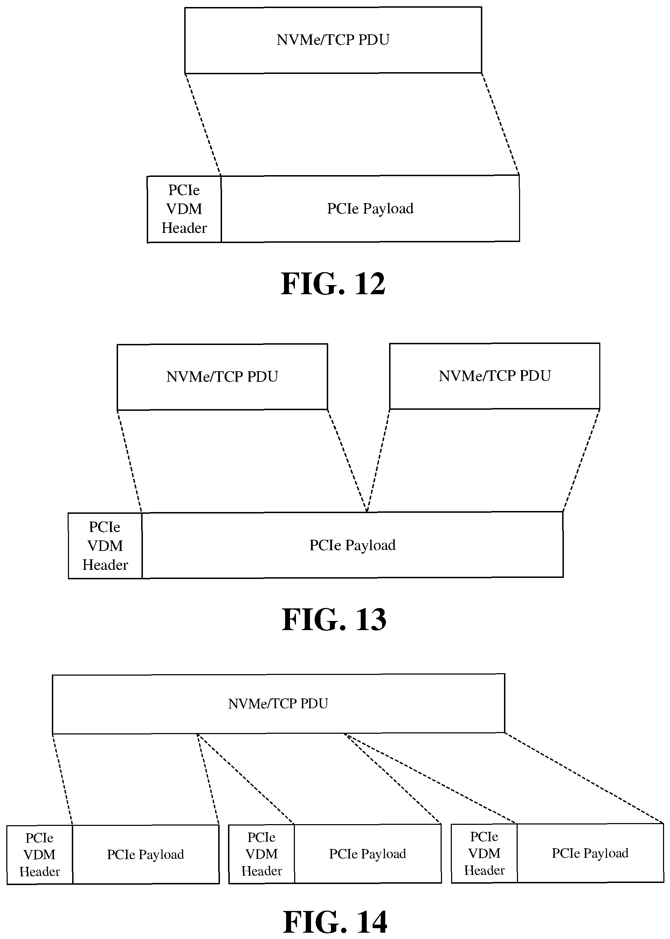

The examples discussed above take the data packet of the first data packet message being encapsulated with the first portion of the first data unit and the data packet of the second data packet message being encapsulated with the second portion of the first data unit as well as the second data unit as an example, but the present disclosure is not limited thereto, and the memory controller in the memory system according to the present disclosure may further encapsulate the NVMe/TCP PDU in the VDM_NVME TLP in other manners, and FIG. 12, FIG. 13, and FIG. 14 are schematic diagrams of three different encapsulation manners according to some examples of the present disclosure, respectively. In some examples, referring to FIG. 12, one NVMe/TCP PDU may be encapsulated in a PCIe payload of one VDM_NVME TLP, that is, the data packet of the first data packet message may be encapsulated with the entirety of the first data unit; referring to FIG. 13, a plurality of NVMe/TCP PDUs may be encapsulated in a PCIe payload of one VDM_NVME TLP in sequence, that is, the data packet of the first data packet message may be encapsulated with the entirety of the first data unit as well as another data unit; and referring to FIG. 14, one NVMe/TCP PDU may be partitioned into a plurality of portions in sequence and encapsulated in PCIe payloads of a plurality of VDM_NVME TLPs, respectively, that is, the data packet of the first data packet message may be encapsulated with a portion of the first data unit.

In some examples, the memory controller 501 is further configured to: receive and parse a third data packet message encapsulated in the PCIe protocol format, wherein a data packet of the third data packet message is encapsulated with at least a portion of a third data unit, and the third data unit is generated in the another protocol format. Here, the data packet of the third data packet message may have a structure similar to the data packet 700 of the first data packet message in the above examples, and in addition to generating and sending data packet messages comprising VDM_NVME TLPs, the memory controller 501 may receive data packet messages comprising VDM_NVME TLPs from other PCIe devices.

In some examples, the data packet of the third data packet message is encapsulated with command information of the third data unit, and the memory controller 501 is further configured to: perform a corresponding operation on the memory device 502 based on the command information. Here, after receiving and parsing the third data packet message, the memory controller 501 may perform a corresponding operation on the memory device 502 based on the NVMe command in the third data unit. The NVMe command may comprise an operation command such as a write command, a read command, or the like, and the memory controller 501 may perform a write operation on the memory device 502 in response to the write command, to write the data information carried in the data packet of the third data packet message into the memory device 502, or the memory controller 501 may perform a read operation on the memory device 502 in response to the read command, to encapsulate the read data obtained from the memory device 502 into the data information in the VDM_NVME TLP and send the data packet message comprising the VDM_NVME TLP to the transmitting device of the third data packet message through the identifier-based routing manner.

In some examples of the present disclosure, the memory controller in the memory system may be configured to generate and send a first data packet message encapsulated in a PCIe protocol format, wherein a data packet of the first data packet message is encapsulated with at least a portion of a first data unit, and the first data unit is generated in another protocol format different from the PCIe protocol format, for example, the another protocol format may be a format of a PDU defined by the NVMe/TCP protocol. Therefore, the first data unit may be sent by using the first data packet message, so that the memory system comprising the PCIe interface may perform interaction of NVMe commands and data with other PCIe devices in a message-based transfer model.

Based on a concept similar to the memory system discussed above, the present disclosure further provides a system, comprising at least one memory system according to any one of the above examples and at least one peer device comprising another PCIe interface, and wherein the memory system is coupled to the peer device through a PCIe bus, and the memory system sends the first data packet message to the peer device via a PCIe channel in the PCIe bus through the PCIe interface.

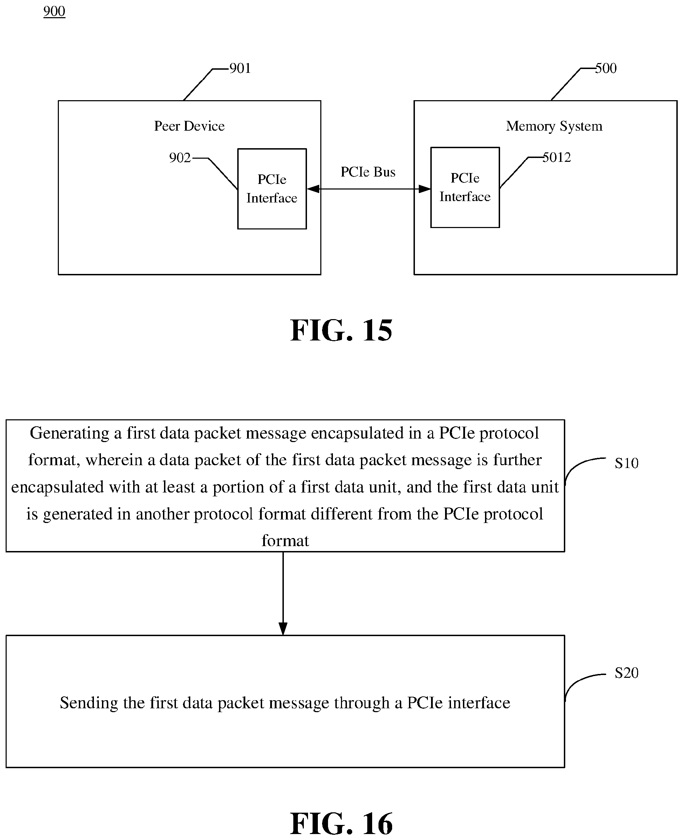

FIG. 15 is a schematic diagram of a system according to some examples of the present disclosure. Referring to FIG. 15, the system 900 comprises a memory system 500 and a peer device 901, wherein the peer device 901 comprises another PCIe interface 902, the memory system 500 is coupled to the peer device 901 through a PCIe bus, and the memory system 500 may send the first packet message to the peer device 901 directly via a PCIe channel in the PCIe bus through the PCIe interface 5012.

In some examples, the memory system 500 may further be connected to a plurality of different peer devices through the PCIe bus, and send data packet messages to the different peer devices directly via different PCIe channels in the PCIe bus.

In some examples of the present disclosure, the PCIe devices in the system may be connected to each other through the PCIe bus, and may perform message interaction directly via the PCIe channels in the PCIe bus, for example, the memory system 500 may send the first data packet message to the peer device 901 directly via the PCIe channel in the PCIe bus through the PCIe interface 5012, and the format of the data packet of the first data packet message may be shown in FIG. 9. Therefore, the process of message interaction between the PCIe devices may not need to involve the host, so that resources of the operating system can be released, which facilitates expansion and improvement of system performance.

In some examples, the peer device 901 in the system connected to the memory system 500 through the PCIe bus may be a memory system, and the memory system 500 and the peer device 901 may belong to different non-volatile memory (NVM) subsystems, respectively. Here, a non-volatile memory subsystem may be a set comprising non-volatile memory (e.g., three-dimensional NAND type memory) and a memory controller, wherein a namespace may be provided to the user by the memory controller in the non-volatile memory subsystem, and the user may access the non-volatile memory through the namespace.

In some examples of the present disclosure, for the memory system 500 and the peer device 901 that belong to different non-volatile memory subsystems, when data duplication between the memory system 500 and the peer device 901 needs to be implemented, for example, when the data stored in the memory system 500 is copied to the peer device 901, the data that needs to be copied may be encapsulated into the VDM_NVME TLP according to some examples of the present disclosure, and sent to the peer device 901 via a PCIe channel in the PCIe bus through the PCIe interface 5012, so that the data stored in the memory system 500 may be copied to the peer device 901 to implement data duplication between different non-volatile memory subsystems.

Based on a concept similar to the memory system discussed above, the present disclosure further provides an operating method of a memory system. FIG. 16 is a schematic flowchart of an operating method of a memory system according to some examples of the present disclosure, wherein the operating method of the memory system comprises the following steps:
Step S10: generating a first data packet message encapsulated in a PCIe protocol format, wherein a data packet of the first data packet message is encapsulated with at least a portion of a first data unit, and the first data unit is generated in another protocol format different from the PCIe protocol format; and
Step S20: sending the first data packet message through a PCIe interface.

In some examples, referring to FIG. 9, performing the step S10 comprises: generating a first message header 701 and a first payload 702 to generate a data packet 700 of the first data packet message, wherein the first payload 702 is located after the first message header 701, and the first payload 702 is encapsulated with at least a portion of the first data unit.

In some examples, referring to FIG. 9, performing the step S10 further comprises: configuring a value of a first field (Type) in the first message header 701 to indicate that the first data packet message is to be sent in an identifier-based routing manner.

In some examples, referring to FIG. 9, performing the step S10 further comprises: configuring a value of a second field (Requester ID) in the first message header 701 to indicate an identifier of the memory system; and configuring a value of a third field (Destination ID) in the first message header to indicate an identifier of a peer device receiving the first data packet message.

In some examples, referring to FIG. 9, performing the step S10 further comprises: configuring a value of a fourth field (Vendor ID) in the first message header 701 to indicate that the first data packet message is encapsulated in the PCIe protocol format, and the data packet of the first data packet message is encapsulated with at least a portion of the first data unit, wherein the fourth field is located after the third field.

In some examples, referring to FIG. 9, performing the step S10 further comprises: configuring a value of a fifth field (Source Port) in the first message header 701 to indicate a port number of the memory system; and configuring a value of a sixth field (Destination Port) in the first message header 701 to indicate a port number of the peer device, wherein the fifth field and the sixth field are both located after the fourth field.

In some examples, referring to FIG. 9, performing the step S10 further comprises: configuring a value of a seventh field (Length) in the first message header 701 to indicate the number of double words comprised in the first payload 702; and configuring a value of an eighth field (LLEN) in the first message header to indicate a length of valid information in the last double word in the first payload 702.

In some examples, the operating method of the memory system further comprises: generating the first data unit according to the another protocol format discussed above, wherein the first data unit comprises a first portion and a second portion, and the first payload is encapsulated with at least one of the first portion or the second portion of the first data unit.

In some examples, referring to FIG. 10 and FIG. 11, the operating method of the memory system further comprises: generating a second data packet message encapsulated in the PCIe protocol format, wherein a data packet 800 of the second data packet message comprises a second message header 801 and a second payload 802, the first data unit PDU A comprises a first portion P1 and a second portion P2, the first payload 702 is encapsulated with the first portion P1 of the first data unit PDU A, and the second payload 802 is encapsulated with the second portion P2 of the first data unit PDU A.

In some examples, referring to FIG. 11, the second payload 802 is encapsulated with a second data unit PDU B, wherein the second data unit PDU B is generated in the another protocol format discussed above, and the second portion P2 of the first data unit PDU A is located between the second message header 801 and the second data unit PDU B.

In some examples, the operating method of the memory system further comprises: receiving and parsing a third data packet message encapsulated in the PCIe protocol format, wherein a data packet of the third data packet message is encapsulated with at least a portion of the third data unit, and the third data unit is generated in the another protocol format.

The features disclosed in several device examples according to the present disclosure may be arbitrarily combined without conflict, to obtain new device examples.

The methods disclosed in several method examples according to the present disclosure may be arbitrarily combined without conflict, to obtain new method examples.

The above descriptions are only examples of the present disclosure, and the protection scope of the present disclosure is not limited thereto, and changes or replacements that may be easily conceived by any person skilled in the art within the technical scope of the present disclosure should be covered within the protection scope of the present disclosure.

## Claims

1. A memory system, comprising:
a memory device; and
a memory controller coupled to the memory device, wherein the memory controller comprises a PCIe interface, and the memory controller is further configured to:
generate a first data packet message encapsulated in a PCIe protocol format, wherein a data packet of the first data packet message is encapsulated with at least a portion of a first data unit, and the first data unit is generated in another protocol format different from the PCIe protocol format; and
send the first data packet message through the PCIe interface.

2. The memory system of claim 1, wherein the memory controller is further configured to:
generate a first message header and a first payload to generate a data packet of the first data packet message, wherein the first payload is located after the first message header, and the first payload is encapsulated with at least a portion of the first data unit.

3. The memory system of claim 2, wherein the first message header comprises a first field, and the memory controller is further configured to:
configure a value of the first field to indicate that the first data packet message is to be sent in an identifier-based routing manner.

4. The memory system of claim 3, wherein the first message header further comprises a second field and a third field, and the memory controller is further configured to:
configure a value of the second field to indicate an identifier of the memory system; and
configure a value of the third field to indicate an identifier of a peer device receiving the first data packet message.

5. The memory system of claim 4, wherein the first message header further comprises a fourth field, the fourth field is located after the third field, and the memory controller is further configured to:
configure a value of the fourth field to indicate that the first data packet message is encapsulated in the PCIe protocol format, and the data packet of the first data packet message is encapsulated with at least a portion of the first data unit.

6. The memory system of claim 5, wherein the first message header further comprises a fifth field and a sixth field, the fifth field and the sixth field are both located after the fourth field, and the memory controller is further configured to:
configure a value of the fifth field to indicate a port number of the memory system; and
configure a value of the sixth field to indicate a port number of the peer device.

7. The memory system of claim 2, wherein the data packet of the first data packet message comprises a plurality of double words, the first message header comprises a seventh field and an eighth field, and the memory controller is further configured to:
configure a value of the seventh field to indicate the number of the double words comprised in the first payload; and
configure a value of the eighth field to indicate a length of valid information in the last double word in the first payload.

8. The memory system of claim 2, wherein the memory controller is further configured to:
generate the first data unit in the another protocol format, wherein the first data unit comprises a first portion and a second portion, and the first payload is encapsulated with at least one of the first portion or the second portion of the first data unit.

9. The memory system of claim 2, wherein the first data unit comprises a first portion and a second portion, the first payload is encapsulated with the first portion of the first data unit, and the memory controller is further configured to:
generate a second data packet message encapsulated in the PCIe protocol format, wherein a data packet of the second data packet message comprises a second message header and a second payload, and the second payload is encapsulated with the second portion of the first data unit.

10. The memory system of claim 9, wherein the second payload is encapsulated with a second data unit, the second data unit is generated in the another protocol format, and the second portion of the first data unit is located between the second message header and the second data unit.

11. The memory system of claim 9, wherein the first portion of the first data unit comprises at least header information, command information, a check code of the header information, and first data information of the first data unit, and the second portion of the first data unit comprises second data information of the first data unit, and a check code of data information composed of the first data information and the second data information.

12. The memory system of claim 1, wherein the memory controller is further configured to:
receive and parse a third data packet message encapsulated in the PCIe protocol format, wherein a data packet of the third data packet message is encapsulated with at least a portion of a third data unit, and the third data unit is generated in the another protocol format.

13. The memory system of claim 12, wherein the data packet of the third data packet message is encapsulated with command information of the third data unit, and the memory controller is further configured to:
perform a corresponding operation on the memory device based on the command information.

14. The memory system of claim 1, wherein the memory controller further comprises a memory interface, and the memory controller is coupled to the memory device through the memory interface.

15. The memory system of claim 1, wherein the another protocol format comprises a format of a protocol data unit defined by Non-Volatile Memory Express over Transmission Control Protocol.

16. The memory system of claim 1, wherein the memory system comprises a solid-state drive having the PCIe interface.

17. A system, comprising:
at least one memory system, comprising:
a memory device; and
a memory controller coupled to the memory device, wherein the memory controller comprises a PCIe interface, and the memory controller is further configured to:
generate a first data packet message encapsulated in a PCIe protocol format, wherein a data packet of the first data packet message is encapsulated with at least a portion of a first data unit, and the first data unit is generated in another protocol format different from the PCIe protocol format; and
send the first data packet message through the PCIe interface; and
at least one peer device comprising another PCIe interface,
wherein the memory system is coupled to the peer device through a PCIe bus, and the memory system sends the first data packet message to the peer device via a PCIe channel in the PCIe bus through the PCIe interface.

18. An operating method of a memory system, comprising:
generating a first data packet message encapsulated in a PCIe protocol format, wherein a data packet of the first data packet message is encapsulated with at least a portion of a first data unit, and the first data unit is generated in another protocol format different from the PCIe protocol format; and
sending the first data packet message through a PCIe interface.

19. The operating method of the memory system of claim 18, wherein generating the first data packet message encapsulated in the PCIe protocol format comprises:
generating a first message header and a first payload to generate a data packet of the first data packet message, wherein the first payload is located after the first message header, and the first payload is encapsulated with at least a portion of the first data unit.

20. The operating method of the memory system of claim 19, wherein generating the first data packet message encapsulated in the PCIe protocol format further comprises:
configuring a value of a first field in the first message header to indicate that the first data packet message is to be sent in an identifier-based routing manner.

21. The operating method of the memory system of claim 20, wherein generating the first data packet message encapsulated in the PCIe protocol format further comprises:
configuring a value of a second field in the first message header to indicate an identifier of the memory system; and
configuring a value of a third field in the first message header to indicate an identifier of a peer device receiving the first data packet message.

22. The operating method of the memory system of claim 21, wherein generating the first data packet message encapsulated in the PCIe protocol format further comprises:
configuring a value of a fourth field in the first message header to indicate that the first data packet message is encapsulated in the PCIe protocol format, and the data packet of the first data packet message is encapsulated with at least a portion of the first data unit, wherein the fourth field is located after the third field.

23. The operating method of the memory system of claim 22, wherein generating the first data packet message encapsulated in the PCIe protocol format further comprises:
configuring a value of a fifth field in the first message header to indicate a port number of the memory system; and
configuring a value of a sixth field in the first message header to indicate a port number of the peer device, wherein the fifth field and the sixth field are both located after the fourth field.

24. The operating method of the memory system of claim 19, wherein generating the first data packet message encapsulated in the PCIe protocol format further comprises:
configuring a value of a seventh field in the first message header to indicate the number of double words comprised in the first payload; and
configuring a value of an eighth field in the first message header to indicate a length of valid information in the last double word in the first payload.

25. The operating method of the memory system of claim 19, further comprising:
generating the first data unit in the another protocol format, wherein the first data unit comprises a first portion and a second portion, and the first payload is encapsulated with at least one of the first portion or the second portion of the first data unit.

26. The operating method of the memory system of claim 19, further comprising:
generating a second data packet message encapsulated in the PCIe protocol format, wherein a data packet of the second data packet message comprises a second message header and a second payload, the first data unit comprises a first portion and a second portion, the first payload is encapsulated with the first portion of the first data unit, and the second payload is encapsulated with the second portion of the first data unit.

27. The operating method of the memory system of claim 26, wherein the second payload is encapsulated with a second data unit, the second data unit is generated in the another protocol format, and the second portion of the first data unit is located between the second message header and the second data unit.

28. The operating method of the memory system of claim 18, further comprising:
receiving and parsing a third data packet message encapsulated in the PCIe protocol format, wherein a data packet of the third data packet message is encapsulated with at least a portion of a third data unit, and the third data unit is generated in the another protocol format.
